# NEW EUROPEAN PATENT SPECIFICATION

(11) **EP 2 483 113 B2**
(45) Date of publication and mention of the opposition decision: **06.01.2021**
(45) Mention of the grant of the patent: 12.08.2015
(21) Application number: 09744452.5
(22) Date of filing: 29.09.2009
(51) Int. Cl.: B60T 7/04, B60T 7/10, B60T 13/26, B60T 13/66, B60T 13/74

(54) **ELECTRONICALLY CONTROLLED PARK BRAKE SYSTEM**
ELEKTRONISCH GESTEUERTES HANDBREMSENSYSTEM
SYSTÈME DE FREIN DE STATIONNEMENT À COMMANDE ÉLECTRONIQUE

(43) Date of publication of application: 08.08.2012
(73) Proprietor: Volvo Lastvagnar AB, 405 08 Göteborg (SE)
(72) Inventor: FARRES, Lionel, F-69800 Saint Priest (FR); REZIG, Aime, F-38200 Luzinay (FR); SADDIER, Pierre, F-42800 Saint-Joseph (FR)
(74) Representative: Lavoix
(86) International application number: PCT/IB2009/007183
(87) International publication number: WO 2011/039556

(56) References cited:
- EP-A1- 0 978 432
- EP-A1- 1 504 975
- EP-A1- 1 621 953
- EP-A1- 1 698 536
- WO-A1-00/29268
- WO-A1-2007/071299
- WO-A2-03/097423
- DE-A1- 10 157 377
- DE-A1- 19 859 804
- DE-A1-102006 008 156
- US-A1- 2008 262 687

## Description

### Technical field

The invention relates to the field of electronically controlled vehicle park brake systems

### Background art

Document EP-1.406.805 describes an electronically controlled vehicle park brake system which is particularly suitable for a commercial vehicle such as a truck. In this document, it is described a park brake system which can comprise a spring biased pneumatic park brake actuator. The park brake actuator applies a force on a park brake device which can be for example a disc brake or a drum brake. The force applied by the actuator is the balance between on the one hand the force of the spring, which tends to activate the park brake, and on the other the force exerted by the pneumatic pressure in the cylinder which counteracts the force of spring. By controlling the pressure in the pneumatic cylinder, it can be controlled the whether the force generated by the spring is fully applied to the brake device, thereby fully activating the park brake when there is no pressure in the cylinder, or whether no force is applied to the brake device, thereby fully deactivating the park brake when the pneumatic force in the cylinder exceed the force of the spring.

Document WO-03/097423 discloses an electronically controlled vehicle park brake system where an ECU controlling the park brake actuation module receives information from an input device comprising an operating member, the position of which is monitored by micro-switches or by a linear sensor such as a potentiometer. The input device comprises electrical connectors through which the micro-switches or sensors are to be connected to the ECU.

Document EP 1 504 975 A1 discloses a controlled vehicle park brake system where an electric unit delivers a proportional signal corresponding to the position of the park brake actuating lever to a park brake control unit.

Document EP 1698 536 A1 discloses a controlled vehicle park brake system where an electric sensor is operatively associated with a park brake actuator and is operative to generate park brake actuation signals corresponding to the respective actuator position of the park brake actuator. Park brake actuation signals are transmitted to a park brake control unit. DE 10 2006 009 729 A1 discloses a park brake system for a vehicle according to the preamble of claim 1.

One object of the invention is to provide an improved electronically controlled vehicle park brake system where the installation of the park brake input device on the vehicle is both easy and reliable.

### Summary

In view of the above objective, the invention provides for a park brake system for a vehicle, wherein the park brake system is electronically controlled through a park brake ECU to achieve a proportional braking effect according to signals received from a park brake input device through which a user of the vehicle can control the degree of activation of the park brake. The park brake input device comprises:
- an operating member which the user can displace with respect to a base between a first and second position to control the degree of activation of the park brake;
- at least one sensor to determine the instant position of the operating member with respect to the base between the first position and the second position;
- a controller circuit for generating a digital signal indicative of the degree of activation of the park brake requested by the user and for communicating this digital signal to at least the park brake ECU.
According to the invention, the controller circuit comprises a central processing unit. The operating member is mechanically biased to return automatically to a neutral position, and the controller circuit is programmed to perform an analysis of a deviation between a theoretic neutral position of the operating member and an effective neutral position of the operating member and to compensate any deviation when generating and/or communicating the digital signal indicative of the degree of activation of the park brake;

According to further possible supplementary features:
- the controller circuit may be integral with the park brake input device;
- the controller circuit may be mounted on the base of the park brake input device;
- the controller circuit may receive an analog signal from the at least one operating member position sensor;
- the park brake ECU is remote from the park brake input device, and in that the controller circuit may communicate with the park brake ECU through a digital databus;
- the controller circuit may communicate with the park brake ECU through a multiplex communication digital databus;
- the sensor to determine the instant position of the operating member with respect to the base may comprise a magneto-resistive sensor;
- the park brake input device may identify at least one further position of the operating member, outside of the range comprised between the first and second positions, for which a defined digital signal is communicated to the park brake ECU;
- the park brake input device may identify at least a third position of the operating member, for which the park brake ECU may control a deactivation of the park brake;
- the park brake input device may identify at least a fourth position of the operating member, for which the park brake ECU performs a brake installation test;
- the park brake input device may comprise an operating member in the form of a lever articulated on the base;
- the park brake ECU electronically controls a park brake actuator to create a proportional force to be applied to a park brake device to achieve the proportional braking effect ;
- the park brake actuator is a spring biased pneumatic cylinder wherein the spring creates the force applied to the park brake device, and wherein a pneumatic pressure in the cylinder counteracts the force of the spring to control the force effectively applied to the park brake device.

### Description of figures

- Figure 1 is a schematic representation of a possible integration of an electronic input device in a park brake system according to the invention;
- Figure 2 shows another possible variant of the integration of an electronic input device in a park brake system according to the invention;
- Figure 3 illustrates schematically an embodiment of a controller circuit for an input device according to the invention;
- Figures 4A to 4D illustrate four main positions of the operating member of a possible embodiment of an input device according to the invention;
- Figure 5 is a graph representing the main steps of a method for controlling the activation of a park brake system according to the invention;
- Figure 6 is a graph representing the main steps of a method for controlling the deactivation of a park brake system according to the invention; and
- Figure 7 is a graph representing the main steps of a further refined method for controlling the deactivation of a park brake system according to the invention.

### Detailed description

The invention relates to a park brake system, such as a park brake system which can be installed on a commercial vehicle such as a heavy truck having a maximum gross weight comprised between 7.5 and 120 tons.

Such vehicles are frequently equipped with a pneumatic brake system where pressurized air is stored in a tank and sent to service brake actuators which provide the braking forces needed to decelerate the vehicle.

Such brake systems are usually equipped with at least one park brake actuator which, through a park brake device, can generate a braking effort to keep the vehicle at standstill.

In many cases, the park brake actuator is different from the service brake actuator, but they are often integrated into a common hardware component, and, in many cases both actuators act on the same brake device such as disc brake or a drum brake. Nevertheless, the invention could be applied in systems having actuators performing both the park brake and the service brake function or in systems having separate park brake and service brake devices

The efforts needed to achieve satisfactory park braking are usually less than those needed to achieve service braking. On the other hand, the park braking effort must remain applied for a long period of time, and this must remain true even though the vehicle powertrain may not be operating. Therefore, park brake actuators for such brake systems are often constructed as spring biased actuators where the spring provides the braking effort and where the effort provided by the spring may be counteracted within the actuator by the admission of a fluidic pressure in a pressure chamber of the actuator. The fluidic pressure may entirely counteract the effort provided by the spring to completely deactivate the park brake. With such actuators, the park brake becomes applied simply by letting air out of the pressure chamber of the actuator. Letting the pressure chamber vented, i.e. open to the atmosphere, or with only a small residual pressure, keeps the park brake applied. The park brake can then be considered to be locked in its applied status. Other types of park brake actuators might need a specific mechanism to keep the park brake locked in its applied status.

In the park brake systems according to the invention, the park brake actuator is electronically controlled. In other words, the amount of effort provided by the park brake actuator to the park brake device is controlled through at least one park brake ECU (Electronic Control Unit). The park brake ECU can be a dedicated ECU, as it will be represented hereunder, or it could be embedded within a multi-function ECU performing other control functions. It could also be implemented as a fragmented ECU, where the park brake control is achieved through the use of several ECUs each performing part of the control task. It is to be noted that, especially for heavy duty trucks, the park brake ECU may be designed to not only control the park brake actuators, but to control also trailer or semi-trailer brakes, or even in certain cases the service brakes to achieve the park brake function.

The invention will be described hereunder within the context of a vehicle equipped with a pneumatic system where the park brake system comprises an actuator which is a spring biased pneumatic actuator acting on park brake device such as for example a disc brake device or a drum brake device.

The system may comprise an air compressor which can be operated by the engine of the vehicle or by an electric machine. The compressed air delivered by the compressor may be delivered to an air pressure management device which may comprise an air dryer, a main air pressure regulator and several secondary air pressure regulators associated with different outputs of the air pressure management device. On each output of the device is to be connected an air consuming circuit, which may comprise a first and second service brake air circuits, a parking brake air circuit, an air suspension circuit, a trailer brake circuit, an auxiliary circuit, etc.... The pressurized air delivered to the different air consuming circuit is controlled at least to a minimum and a maximum pressure level, and the various primary and secondary regulators form a protection system which prevents any leak in one consumer circuit from leaking the whole pneumatic circuit of the vehicle. The various regulators are controlled to shut-off the leaking circuit from the other circuits which may continue to operate.

In a pneumatic park brake circuit, a valve or set of valves is provided to control the feeding of a park brake actuator with pressurized air. Such park brake valve assembly will make it possible to control the air pressure in the park brake actuator, either increasing the air pressure in said actuator, by admitting more air in the actuator pressure chamber, or decreasing said pressure, by letting air escape from said actuator pressure chamber. While this valve assembly is traditionally a simple manual pneumatic valve which is installed in the vehicle cabin to be operated directly by the driver, the park brake system according to the invention will in most cases involve that, in the context of a pneumatic park brake actuator, an electronically controlled valve assembly is provided somewhere in the park brake air circuit to achieve said control of the air pressure in that park brake actuator.

In document EP-1.406.805, it is disclosed an air pressure management device where the valve assembly for controlling the pressure in the park brake actuator is included in the air pressure management device. Nevertheless, the present invention could also be implemented in a park brake system comprising an electronically controlled valve assembly which could be for exemple integrated with the park brake actuator or which could be independent from the air pressure management device and from the actuator. In any case, it should be understood that the electronically controlled valve assembly could include an electronically controlled pilot valve, such as a proportional electro-valve, which would pilot fluidically a main fluidically-controlled valve.

In a system according to the invention, the park brake system can be at least partially controlled by the driver of the vehicle. Therefore, the park brake system according to the invention comprises a park brake input device through which the driver may indicate to the system his wish to activate or deactivate the park brake.

Moreover, in a system according to the invention, the system comprises a park brake actuator which can be controlled to create a proportional force to be applied to the park brake device to achieve a proportional braking effect. By proportional, it is meant that it is possible to control the actuator such that the system provides a full park braking effort, such that it provides no braking effort, and such that it provides at least a number of intermediate braking efforts in-between. It is also meant that these intermediate braking efforts can be maintained depending on driver input. In other words, proportional control of the actuator is to be opposed to a simple on/off control, and also be opposed to an on/off control with a given transition mode between the on and off modes, including if said transition is progressive according to one or several predefined effort versus time curves.

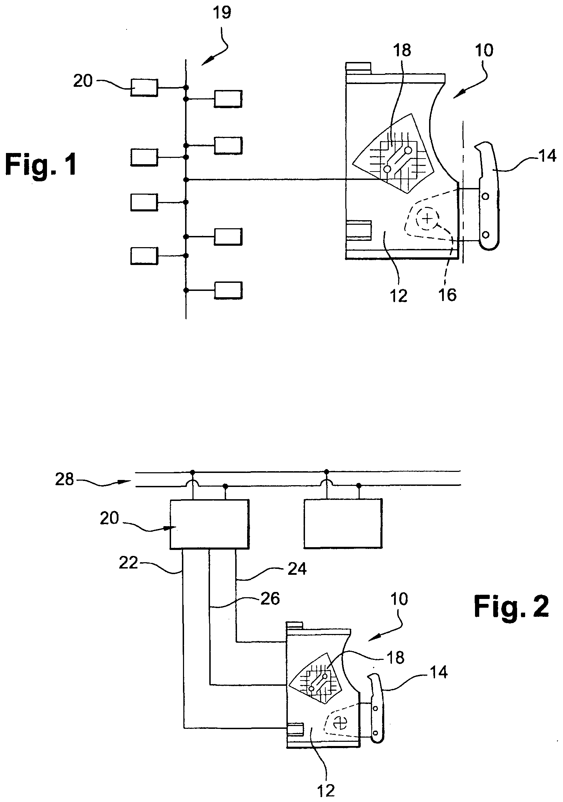

Figure 1 is a schematic view of one possible implementation of a park brake input device into a park brake system according to the invention.

In this embodiment of the invention, it is shown that the park brake input device 10 comprises a base 12, and an operating member 14 which the user can displace with respect to the base 12 to control the degree of activation of the park brake. In this embodiment, the operating member 14 comprises a lever which is articulated on the base 12, but the operating member could take other forms, such as the form of a slider. The operating member may be displaced by the user from at least a first position, which can be a neutral position to a second position. As will be described hereunder, the first position can be a neutral position for indicating that no change in the park brake status is requested and/or, when the park brake system is in a proportional activation mode, a position for indicating that no park brake activation is requested. The second position can be a position for indicating that a full braking effect is requested. Both first and second positions can be end positions, but as in the example which will be described hereunder, the operating member may have further positions. At least one sensor 16 is provided to determine the instant position of the operating member 14 with respect to the base 12. Preferably, the sensor 16 is of the contact-less type, and most preferably, of the magneto-resistive type. Also, it is preferred that at least two sensors 16 are provided to achieve redundancy, which increases the degree of safety of the input device. When two sensors are provided, they are preferably installed and operated in combination to achieve a better accuracy of the determination of the position of the operating member than if only one sensor was used. Where the operating member comprises a lever articulated on the base, the sensor or sensors are preferably installed near the articulation axis.

According to the invention, the park brake input device 10 also includes a controller circuit 18 for generating a digital signal indicative of the degree of activation of the park brake requested by the user and for communicating this digital signal to at least a park brake ECU.

Preferably, the controller circuit 18 is integral with the park brake input device 10. In other words, the controller circuit 18 is structurally connected with the other components of the park brake input device 10 so that they form a common structural unit which can be pre- assembled and which can be installed as a single unit on a larger vehicle subassembly such as a vehicle dashboard or a vehicle console. For example, the controller circuit 18 can be mounted on the base 12 of the park brake input device.

Preferably, the controller circuit 18 communicates with the park brake ECU through a digital databus. Such a databus can be a serial communication databus. Examples of a databus which are widely used in the automotive industry and which are suitable for this application are the systems known as CAN bus, LIN bus or FLEXRAY bus. Such databuses support multiplexing, thereby allowing different pieces of information to be transferred through the same physical communication channel.

In Figure 1 is shown the case where the controller circuit 18 is connected to the park brake ECU through a shared databus 19, that is a databus where other ECUs and/or controllers are connected through the same databus. On Figure 2 is shown the case where the controller circuit 18 is connected to the park brake ECU 20 through a dedicated databus. This dedicated databus is for example a LIN bus operating on a single wire 22. It is shown on this Figure 2 that the controller circuit 18 can also be connected to the brake ECU through a power supply line 24 and a ground line 26. In the example of Figure 2, the park brake ECU is itself connected to a shared databus 28 which can be for exemple a CAN bus. It must be noted that communication between the controller circuit 18 and the park brake ECU 20 could be performed by wireless means, such as through a Wi-Fi or Bluetooth connection.

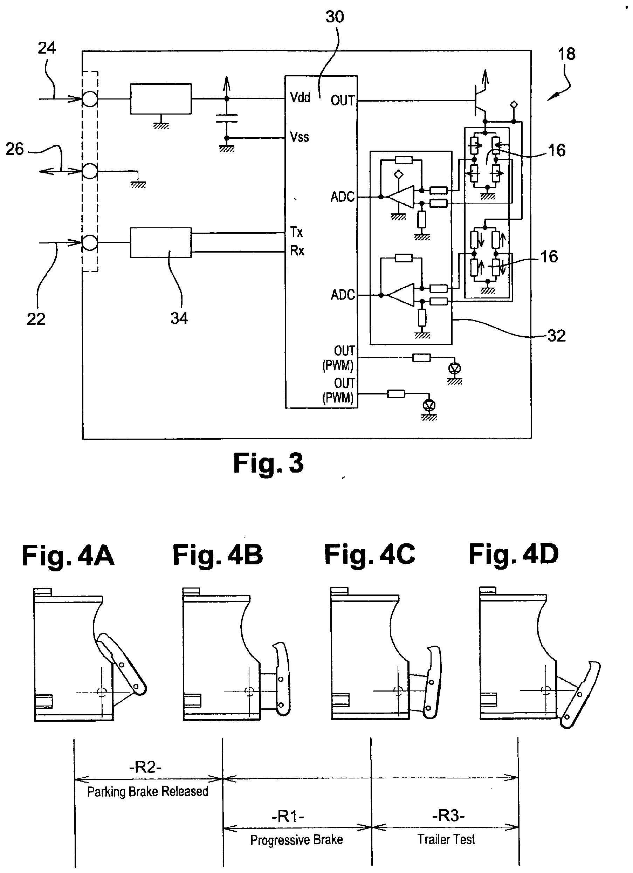

On Figure 3 is shown a schematic example of a controller circuit 18 suitable for a park brake input device 10 according to the invention. The heart of the controller circuit 18 is for example a microcontroller 30. Said microcontroller 30 is an integrated chip which includes a central processing unit CPU, a ROM and a RAM and at least one clock. The microcontroller 30 receives as input analog signals from the sensors 16. In the case described in Figure 3, where two magneto-resistive sensors 16 are used to determine the operating member position, it can be seen that the controller circuit comprises an amplifier stage 32 having two differential amplifiers each receiving two analog signals from one sensor. The amplified differential signal corresponding to each sensor is fed as an input to the microcontroller 30 which, in this case, also comprises an integrated analog to digital converter stage. The analog to digital converter could be a separate chip on the controller circuit 18. The controller circuit also comprises a transceiver 34 which is connected to the output of the microcontroller 30, said transceiver 34 being able to broadcast on the digital databus the digital information which has been processed by the micro-controller 30. According to the invention, the controller circuit 18 is thus able to generate a digital signal indicative of the degree of activation of the park brake requested by the user, here relative to the angular position of the operating member 14 with respect to the base 12, and for communicating this digital signal to at least the park brake ECU 20.

The digital signal indicative of the degree of activation of the park brake requested by the user can be generated in a vast number of ways. It can be very simply the angular difference between the determined position of the operating member and its neutral position. It can also be a computed linear traveled distance of one given point of the operating member between its neutral position and the determined position. Alternatively, any of the above mentioned angle or distance can also be expressed as a percentage of the total angle or distance between the neutral position and the full braking position of the operating member.

There is a clear advantage in having the controller circuit integrated in the park brake input device. Indeed, this allows of course having digital information rather than analog information circulating between the park brake input device 10 and the park brake ECU 20. The two components of the system can therefore be located at different places in the vehicle without any great concern with respect to the communication of information between the two, thanks to the greater resistance of digital communication to problems such as interferences. Also, having the controller circuit 18 integrated with the operating member 14 and the sensor 16 in the same device 10 allows having only one signal compiling for example the information coming from several sensors. This allows for example having multiple sensors on the input device, but a very limited wiring between the input device 10 and the park brake ECU 20. As shown above, the input device 10 needs then as few as one physical wire 22 for communication with the park brake ECU 20, at least when implemented as a LIN bus communication, while nevertheless having a signal of high quality and reliability both with respect to its physical integrity and of its logical content.

On Figures 4A to 4D are shown various positions of the operating member 14 with respect to the base, according to an exemplary embodiment of the invention.

Figures 4B and 4C illustrate two most important positions of the operating member: respectively a neutral position and full braking position.

When the braking system is operating a proportional mode, the neutral position of the operating member 14 corresponds to a position for which no activation of the park brake is requested. When it recognized through the position sensors 16 that the operating member 14 is in its neutral position, the controller circuit 18 is able to communicate to the park brake ECU 20 a signal indicating that status of the operating member, according to which the park brake ECU 20 will control the park actuator so that no park brake force is generated. On the other hand, the operating member 14 is biased towards that neutral position which is then also a rest or released position for the operating member, so that, when the park brake system is not in its proportional mode, the neutral position will be interpreted by the Park brake ECU as a request for maintaining the park brake system in its current status, either applied or deactivated

The full braking position of the operating member 14 corresponds to a position where a maximum braking effort is requested.

According to the invention, the park brake input device 10 is capable not only of determining these two positions, but it is also able to determine at least a number of intermediate positions between these two positions and to generate a signal indicative of these intermediate positions to the park brake ECU 20, in order for the ECU to then control the park brake actuator so that a corresponding braking force is generated. More precisely, the park brake ECU can be programmed to control a given pressure to be supplied to the park brake actuator, to control a given braking torque to be generated by the park brake device, or to control a given deceleration of the vehicle. Most preferably, the input device will be able to determine and communicate more than a dozen, and possibly several dozen positions within the principal range between the neutral position and the full braking position. While the sensors 16 which can be used to determine the operating member position may be analog, so that in theory an infinite number of positions can be determined, the analog to digital conversion will automatically infer than only a finite number of operating members positions may be determined and communicated to the park brake ECU within the principal range R1 extending between the neutral position and the full braking position. In practice, it will be desirable that the number of intermediate positions which can be determined by the input device 10 be such that the perceived variation in braking effort along the range would feel substantially continuous to the driver. It must be noted that in a proportional mode, the braking force applied by the system will be proportional to the instant position of the operating member 14. By proportional, it is meant that the applied braking force will vary progressively with the variation of the position of the operating member, following that position. On the other hand, this proportionality is not necessarily linear, as it may for example be preferred that the braking force should vary slowly in a first part of the principal range and more rapidly in a second part of the principal range, in order to enhance the control accuracy for low baking requests. Basically, it can be considered that the proportionality is defined by a braking curve which links the effective braking force to the detected position of the operating member. Such braking curve can be specifically tailored to each application, depending on the physical design of the operating member or on the type of vehicle. Also, it could be provided that, for a given vehicle, several braking curves may be implemented, for example depending on some vehicle operational parameter(s), such as vehicle speed, vehicle weight, etc... Also, it may be provided that the user of the vehicle may select one of several braking curves or set of curves, based on personal preferences.

On Figure 4A is shown that the operating member may be displaced away from its neutral position towards a park brake deactivation position along a direction opposite to its principal direction of travel towards the full braking position. The park brake deactivation position can be materialized by an end stop for the operating member. Along this opposite range of positions R2, the input device 10 according to the invention is of course technically able to determine a number of intermediate positions of the operating member 14 and to communicate these positions to the park brake ECU 20. Nevertheless, despite the fact that the position of the operating member can be determined quasi continuously along this opposite range, it can be chosen that the deactivation of the park is controlled by the ECU 20 in a simple on/off way, i.e. that the actuator is directly controlled to its deactivated status once the operating member has reached a threshold position in the opposite range of positions. The threshold position can be the end position of the range, or can be an intermediate position. It must be noted that the ECU can control the park brake deactivation in various ways. For example, deactivation can be started only once the operating member is being released by the user after having reached the threshold position. Also, it can be provided that the deactivation is performed only if other conditions are satisfied, either simultaneously or subsequently. In the latter case, the deactivation request can be memorized by the ECU.

On Figure 4D is shown that the operating member may be displaced in its principal direction, further than its full braking position, towards a test position. Indeed, it is known to incorporate in a park bark control system a so-called "trailer test" position where it is tested either that the vehicle park brake system is able to hold the vehicle even when coupled to a fully loaded trailer or semi-trailer in case of failure of the trailer brakes, or that the trailer or semi-trailer brakes are operative. The test position can be materialized by an end stop for the operating member, while the full braking position can then be materialized by an increased resistance to displacement of the operating member around that full braking position, such as a so-called "hard point". Along this the extended range of positions R3 from the full braking position to the test position, the input device according to the invention is of course technically able to determine a number of intermediate positions and to communicate these positions to the park brake ECU. Nevertheless, despite the fact that the position of the operating member can be determined quasi continuously along this extended range, the "trailer test" may be performed once the operating member has reached a threshold position in the extended range of positions. The threshold position can be the end position of the extended range, or can be an intermediate position.

Having a multiplex communication databus can enable that other pieces of information can be transferred from the controller circuit to the park brake ECU. For example, it is possible to provide that the controller circuit sends to the park brake ECU specific information relating to when the operating handle reaches a predetermined position, such as any of the four above defined positions. It can also be provided that specific information is provided to the ECU regarding whether the operating handle is within a predefined range of positions, such as ranges R1, R2 or R3.

A further advantage of having the controller circuit integrated with the input device is the ability to perform an auto-calibration and/or an auto-diagnostic of the input device 10, upstream of the communication channel with the park brake ECU 20.

For example, the controller circuit 18 can be programmed to detect that, either at an initial stage, or due to use of the input device, an effective physical position of the operating member does not correspond to a theoretical position. Such offset can be due for example to the mechanical tolerances on the components of the input device and on their assembly, or, as another example, they can result from the wear of the components, or can be due to the operating temperature. For example the controller circuit 18 can be programmed to scrutinize the effective rest position and/or an effective end position of the operating member. If it detects that such position is repeatedly and consistently determined with an offset compared to an expected value, the controller can then compensate the value measured by the sensor or sensors by the detected offset, and can send a compensated digital signal to the park brake ECU. For example, if it is expected that the input device sends a signal comprising a value between 0 and 100 proportionally indicative of the position of the operating member between its neutral position and the full braking position, the latter being either an end stop position or a position corresponding to an increased travel resistance, then the auto-calibration process can make sure that the effective range of values spans the entire 0-100 range, even if, for example for mechanical reasons, the operating member does not return fully to its theoretical neutral position and/or does not fully reach its theoretical full braking position.

Also, the controller circuit 18 can be programmed to perform an auto-diagnosis of the input device 10, for example for being able to detect that a sensor defaults. For example, if there is a clear discrepancy between the values received from the two sensors, or if the signal from one sensor is clearly abnormal, the controller circuit can be programmed to send only the most reliable information and/or to send to the park brake ECU 20 a default signal indicating malfunction of the park brake input device 10. Of course, the controller circuit can also be programmed to determine the criticality of the default and to send a corresponding signal to the park brake ECU. Another auto-diagnosis function could be linked to the auto-calibration process. For exemple, if the detected offset between an effective and a theoretical given position of the operating member exceeds a certain threshold, then it can be diagnosed that this offset should not be compensated and/or that a corresponding default signal should be sent to the park brake ECU. Of course, the default signal can be sent by the input device 10 to the park brake ECU 20 through the same digital communication channel than the signal indicative of the degree of activation of the park brake requested by the user, thanks to multiplexing.

The auto-calibration and/or the auto-diagnosis of the input device being performed by the input device itself, thanks to its incorporated controller circuit, these routines can be conducted with more accuracy and more reliability as they cannot be disturbed by a communication channel which would be necessary between the input device and the corresponding ECU if the diagnosis and/or the calibration were to be performed in a remote ECU.

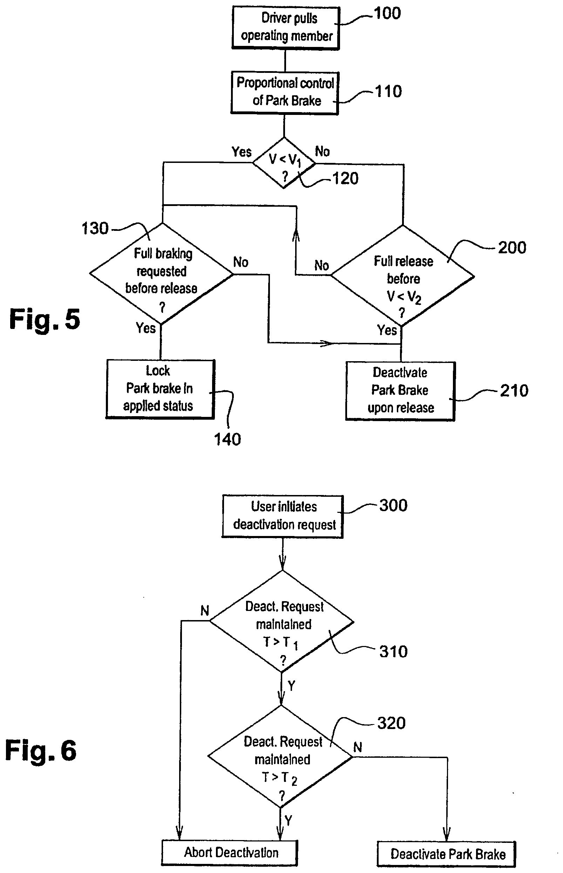

Figure 5 is a diagram showing an example of one aspect of a control method of a park brake system, particularly for controlling the activation of the park brake system. Such method can advantageously be performed using a system as described above.

The method starts at step 100 by the detecting that the driver pulls the operating member of the park brake input device from its neutral position towards its full braking position. This initiates a park brake activation sequence. The system then enters a proportional mode at step 110 where a braking effort is generated by the park brake system proportionally to the position of the operating member. Then, depending on the vehicle speed upon the sequence initiation, two sub routines may be chosen. If the vehicle speed V is inferior to a first threshold V1, as investigated at step 120, then it is determined that the vehicle is at standstill or almost at standstill. It is then checked at step 130 whether full braking is requested before the operating member is released. If yes, the park brake system is locked in its applied status. If at step 130 it is detected that the operating member is not brought to the full braking position, the park brake system stays in its proportional mode until the operating member is released and, at step 210, the park brake system is deactivated upon release of the operating member.

If at step 120, it is checked that the vehicle speed upon intiating the sequence is superior to threshold V1, then, while still in the proportional mode, it is checked at step 200 if the operating member is released before the vehicle speed becomes inferior to a second threshold V2. If yes, then the park brake system is deactivated upon release of the operating member at step 210. If no, then it is determined that the vehicle has or will arrive at standstill or quasi standstill and it is proceeded to step 130 as described above.

When applying such a method, the park brake is locked in an applied status upon termination of the sequence if the vehicle speed was below a first threshold speed at park brake activation sequence initiation or below a second threshold speed at park brake activation sequence termination. To the contrary, the park brake is released upon termination of the braking sequence if the vehicle speed was over a first threshold speed at park brake activation sequence initiation and over a second threshold speed at park brake activation sequence termination.

In the method described above, the two threshold speeds V1 and V2 can be equal. Also, it could be provided that a park brake locking position could be further defined after the full braking position of the input device. Such park brake locking position could then be the trigger for allowing locking of the park brake system in its applied status, rather than that trigger being the full braking position as described above. The full braking position and the park brake locking position could be "separated" by a "hard point" in the travel of the input device so that both positions can be clearly sensed by the user of the system.

On Figure 6 is represented an example of one aspect of a control method for operating an electronically controlled park brake system, particularly for controlling the deactivation of the park brake. Such method does not require that the system is able to proportionally control the application of the park brake, but it can nevertheless be implemented with a park brake system as described above. This aspect of the method is of course compatible with the aspect of the method described in relation to figure 5.

The method of figure 6 operates when the park brake system is in a park brake applied status, and effectively starts when a user, for example the vehicle driver, initiates a deactivation sequence by initiating a deactivation request though a park brake input device at step 300. In the context of the park brake system described above, the deactivation request can be initiated by the driver pushing the operating member towards the park brake deactivation position, at least up to a threshold position.

It is then checked at step 310 whether the request is maintained for at least a period of time T1. This first period of time can be computed from the initiation of the request. Such first period of time T1 can for example be in the order of 1 second. If not, then it is considered that the deactivation request is invalid and the deactivation sequence is aborted. The park brake is not deactivated. This step 310 of the method therefore involves that it is checked, at frequent time intervals during a period of time, whether the driver maintains his request. In the example, this may simply involve checking that the operating handle is maintained in a position equally or further remote from the neutral position than the threshold position, for that period of time.

If the request is maintained for at least a period of time T1, then it could be simply considered that the deactivation request is valid, which could trigger the deactivation of the park brake system. Such deactivation could of course be subject to other operative conditions being satisfied.

Nevertheless, in this embodiment, a further secured method is disclosed. Indeed, if the request is maintained for at least a period of time T1, it is further checked at step 320 whether the deactivation request is terminated before a second time period T2 which expires later than the first period. If not, i.e. if the request is maintained after the expiry of that second period of time, then it is considered that the deactivation request is invalid and the deactivation sequence is aborted. The period of time T2 can also be computed from the deactivation request initiation, and it can have a duration in the order of 3 to 5 seconds. To the contrary, if the request has been terminated before the expiration of the second time period T2, then the deactivation request is considered valid and the method can proceed to the deactivation of the park brake system. An information signal can be sent to the driver to acknowledge the valid deactivation request and to warn him that the park brake is effectively going to be deactivated. Such information signal can be for example an audio, visual or haptic signal.

In summary, with this method, the park brake is deactivated if the park brake deactivation request is maintained for at least a first time period and is terminated before a second time period which expires after the first time period.

Thanks to this method, it is possible to avoid many cases of unwanted deactivation of the park brake system, which could happen when the park brake input device is involuntarily hit by a person or by an object. Indeed, if such hitting is very brief or too long, the park brake system will not consider this as a valid park brake deactivation request.

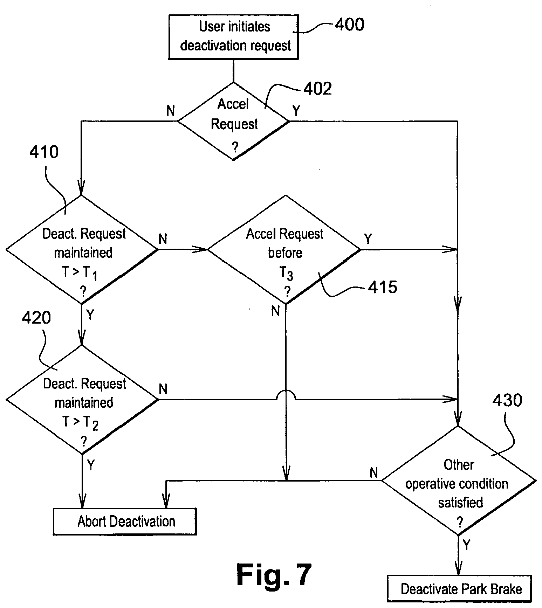

On Figure 7 is represented an example of a further refined method for controlling the deactivation of a park brake system. This method incorporates the previously described core method but provides further control conditions for effectively deactivating the park brake device or for aborting this deactivation.

This method can for example be enforced upon some prerequisites, such as having the gearbox operative. In the case of a manual gearbox, this can for example involve checking that the gearbox has one gear ratio engaged. In a robotized mechanical gearbox, this can involve checking that a gearbox selector is in a "rear" or "drive" position. In a conventional automatic gearbox, this can involve checking that the gearbox selector is not in the "park" position.

When the user initiates a deactivation request in step 400, it is checked at step 402 whether the user is requesting an acceleration of the vehicle. For example; this can involve checking if an accelerator pedal is depressed. If so, this method can directly deactivate the park brake. Other operative conditions may nevertheless be checked at step 430, such as verifying that the service brakes are operative, but this step may be optional, or could be performed at another moment in the method, such as at the beginning of the method.

If, at step 402, no acceleration is requested by the user, then the method proceeds to step 410, where the same check is performed as at step 310 of the previous method. If the deactivation request is maintained for a period of time superior to a duration T1, then it may optionally be checked at step 420, similar to step 320 of the method of figure 6, whether the deactivation request is terminated before the end of a time period T2. If so, the park brake may be deactivated, provided that other operative conditions may be checked at optional step 430 as described above.

If, at step 410, it is detected that the deactivation request has been terminated before the expiration of the first time period T1, then the deactivation sequence is not systematically terminated. Indeed, at step 415, it is then checked whether the driver requests an acceleration of the vehicle before the expiration of a third period of time T3. If so, then the park brake may be deactivated, provided that other operative conditions may be checked at optional step 430 as described above. If, not, then the deactivation sequence may be aborted. The third time period T3 preferably expires after or concurrently with first time period T1.

In variants of the method, in the case where step 420 is implemented, and depending of the respective durations of T2 and T3, a negative response at step 415 could lead first to step 420 (if T2>T3), while a negative response at step 420 could lead to step 415 (if T3>T2).

In summary, in the method of Figure 7, as in the method of Figure 6, the park brake may be deactivated if the park brake deactivation request is maintained for at least a first time period, but, in addition, the park brake may be deactivated if, while a park brake deactivation request has been initiated, the user requests an acceleration of the vehicle through an acceleration input device before the expiration of a third time period. If said acceleration request is initiated prior to or concurrent with the park brake deactivation request, then the brake deactivation can be performed immediately. If it is initiated later, but within the third period of time, then the brake deactivation can be performed immediately following the acceleration request.

In all, cases, either in the method of figure 6 or in the method of figure 7, the brake deactivation may be subject to other operative conditions being satisfied, such as service brakes being operative and/or a gearbox ratio being engaged. Such operative conditions may be checked at various points in the method

One or all time periods T1, T2, T3 may be computed from the park brake deactivation request initiation.

The invention has been described in the context of pneumatic park brake system, but it is understood that it could be applied to any park brake system where an actuator generating the park brake effort can be electronically controlled, such as a park brake system with a hydraulic or electromagnetic actuator which can be controlled electronically.

## Claims

1. Park brake system for a vehicle, wherein the park brake system is electronically controlled through a park brake ECU (20) to achieve a proportional braking effect according to signals received from a park brake input device (10) through which a user of the vehicle can control the degree of activation of the park brake, wherein the park brake input device (10) comprises:
- an operating member (14) which the user can displace with respect to a base (12) between a first and second position to control the degree of activation of the park brake;
- at least one sensor (16) to determine the instant position of the operating member (14) with respect to the base (12) between the first position and the second position;
the park brake input device (10) further comprising a controller circuit (18) for generating a digital signal indicative of the degree of activation of the park brake requested by the user and for communicating (19, 22) this digital signal to at least the park brake ECU (20), whereby the controller circuit (18) comprises a central processing unit and whereby the operating member (14) is mechanically biased to return automatically to a neutral position,
**characterized in that** the controller circuit is programmed to perform an analysis of a deviation between a theoretic neutral position of the operating member and an effective neutral position of the operating member and to compensate any deviation when generating and/or communicating the digital signal indicative of the degree of activation of the park brake.

2. Park brake system according to claim 1, **characterized in that** the controller circuit (18) is integral with the park brake input device (10).

3. Parke brake system according to any preceding claim, **characterized in that** the controller circuit (18) is mounted on the base (12) of the park brake input device (10).

4. Park brake system according to any preceding claim, **characterized in that** the controller circuit (18) receives an analog signal from the at least one operating member position sensor (16).

5. Park brake system according to any preceding claim, **characterized in that** the park brake ECU (20) is remote from the park brake input device (10), and **in that** the controller circuit (18) communicates with the park brake ECU (20) through a digital databus (19, 22).

6. Park brake system according to claim 5, **characterized in that** the controller circuit communicates with the park brake ECU (20) through a multiplex communication digital databus (19, 22).

7. Park brake system according to any preceding claim, **characterized in that** the sensor (16) to determine the instant position of the operating member (14) with respect to the base (12) comprises a magneto-resistive sensor.

8. Park brake system according to any preceding claim, **characterized in that** the park brake input device (10) can identify at least one further position of the operating member (14), outside of the range comprised between the first and second positions, for which a defined digital signal is communicated to the park brake ECU (20).

9. Park brake system according to any preceding claim, **characterized in that** the park brake input device (10) can identify at least a third position of the operating member (14), for which the park brake ECU (20) may control a deactivation of the park brake.

10. Park brake system according to any preceding claim, **characterized in that** the park brake input device (10) can identify at least a fourth position of the operating member (14), for which the park brake ECU (20) performs a brake installation test.

11. Parke brake system according to any preceding claim, **characterized in that** the park brake input device (10) comprises an operating member in the form of a lever (14) articulated on the base (12).

12. Park brake system according to any preceding claim, **characterized in that** the park brake ECU (20) electronically controls a park brake actuator to create a proportional force to be applied to a park brake device to achieve the proportional braking effect.

13. Park brake system according to claim 12,**characterized in that** the park brake actuator is a spring biased pneumatic cylinder wherein the spring creates the force applied to the park brake device, and wherein a pneumatic pressure in the cylinder counteracts the force of the spring to control the force effectively applied to the park brake device.

## Patentansprüche

1. Parkbremssystem für ein Fahrzeug, wobei das Parkbremssystem durch eine Parkbremsen-ECU (20) elektronisch gesteuert wird, um eine proportionale Bremswirkung gemaB Signalen zu erreichen, die von einer Parkbremseneingabevorrichtung (10) empfangen werden, durch die ein Nutzer des Fahrzeugs den Grad der Aktivierung der Parkbremse steuern kann, wobei die Parkbremseneingabevorrichtung (10) umfasst:
ein Betatigungselement (14), das der Nutzer bezüglich einer Basis (12) zwischen einer ersten und einer zweiten Position verstellen kann, um den Grad der Aktivierung der Parkbremse zu steuern;
wenigstens einen Sensor (16) zur Bestimmung der momentanen Position des Betatigungselements (14) bezüglich der Basis (12) zwischen der ersten Position und der zweiten Position;
wobei , dass die Parkbremseneingabevorrichtung (10) auBerdem eine Steuerungsschaltung (18) umfasst, , um ein digitales Signal zu erzeugen, das für den durch den Benutzer angeforderten Grad der Aktivierung der Parkbremse indikativ ist, und um dieses digitale Signal an die wenigstens eine Parkbremsen- ECU (20) zu kommunizieren (19, 22), wobei die Parkbremseneingabe vorrichtung (10) eine zentrale Verarbeitungseinheit umfasst und wobei das Betatigungselement (14) mechanisch vorgespannt ist, um automatisch zu einer neutralen Position zurückzukehren
dadurch gehenzeichnet, dass die Steuerungsschaltung programmiert ist, um eine Analyse einer Abweichung zwischen einer theoretischen neutralen Position des Betatigungselements und einer effektiven neutralen Position des Betatigungselements durchzuführen und jede Abweichung zu kompensieren, wenn das digitale Signal erzeugt und/oder kommuniziert wird, das für den Grad der Aktivierung der Parkbremse indikativ ist.

2. Parkbremssystem nach Anspruch 1, **dadurch gekennzeichnet, dass** die Steuerungsschaltung (18) mit der Parkbremseneingabevorrichtung (10) eine Einheit bildet.

3. Parkbremssystem nach irgendeinem vorhergehenden Anspruch, **dadurch gekennzeichnet, dass** die Steuerungsschaltung (18) an der Basis (12) der Parkbremseneingabevorrichtung (10) angebracht ist.

4. Parkbremssystem nach irgendeinem vorhergehenden Anspruch, **dadurch gekennzeichnet, dass** die Steuerungsschaltung (18) ein analoges Signal von dem wenigstens einen Betatigungselement-Positionssensor (16) empfangt.

5. Parkbremssystem nach irgendeinem vorhergehenden Anspruch, **dadurch gekennzeichnet, dass** die Parkbremsen-ECU (20) von der Parkbremseneingabevorrichtung (10) entfernt ist, und dass die Steuerungsschaltung (18) mit der Parkbremsen-ECU (20) über einen digitalen Datenbus (19, 22) kommuniziert.

6. Parkbremssystem nach Anspruch 5, **dadurch gekennzeichnet, dass** die Steuerungsschaltung mit der Parkbremsen-ECU (20) über einen digitalen Multiplex-Kommunikations-Datenbus (19, 22) kommuniziert.

7. Parkbremssystem nach irgendeinem vorhergehenden Anspruch, **dadurch gekennzeichnet, dass** der Sensor (16) zur Bestimmung der momentanen Position des Betatigungselements (14) bezüglich der Basis (12) einen Magnetwiderstandssensor umfasst.

8. Parkbremssystem nach irgendeinem vorhergehenden Anspruch, **dadurch gekennzeichnet, dass** die Parkbremseneingabevorrichtung (10) wenigstens eine weitere Position des Betatigungselements (14) aur!erhalb des die erste und zweite Position umfassenden Bereichs identifizieren kann, für die ein definiertes digitales Signal an die Parkbremsen-ECU (20) kommuniziert wird.

9. Parkbremssystem nach irgendeinem vorhergehenden Anspruch, **dadurch gekennzeichnet, dass** die Parkbremseneingabevorrichtung (10) wenigstens eine dritte Position des Betatigungselements (14) identifizieren kann, für die die Parkbremsen-ECU (20) eine Deaktivierung der Parkbremse steuern kann.

10. Parkbremssystem nach irgendeinem vorhergehenden Anspruch, **dadurch gekennzeichnet, dass** die Parkbremseneingabevorrichtung (10) wenigstens eine vierte Position des Betatigungselements (14) identifizieren kann, für die die Parkbremsen-ECU (20) einen Bremsinstallationstest durchführt.

11. Parkbremssystem nach irgendeinem vorhergehenden Anspruch, dadurch gekenrizeichnet, dass die Parkbremseneingabevorrichtung (10) ein Betatigungselement in Form eines Hebels (14) umfasst, der an der Basis (12) angelenkt ist.

12. Parkbremssystem nach irgendeinem vorhergehenden Anspruch, **dadurch gekennzeichnet, dass** die Parkbremsen-ECU (20) elektronisch ein Parkbremsenstellglied steuert, um eine proportionale Kraft zu erzeugen, die auf eine Parkbremsvorrichtung zur Erreichung der proportionalen Bremswirkung aufgebracht werden soli.

13. Parkbremssystem nach Anspruch12, **dadurch gekennzeichnet, dass** das Parkbremsenstellglied ein federvorgespannter pneumatischer Zylinder ist, wobei die Feder die auf die Parkbremsvorrichtung aufgebrachte Kraft erzeugt, und wobei ein pneumatischer Druck in dem Zylinder der Kraft der Feder entgegenwirkt, um die Kraft zu steuern, die effektiv auf die Parkbremsvorrichtung aufgebracht wird.

## Revendications

1. Système de frein de stationnement pour un véhicule, dans lequel le système de frein de stationnement est commandé électroniquement à travers un ECU de frein de stationnement (20) pour obtenir un effet de freinage proportionnel en fonction de signaux reçus d'un dispositif d'entrée de frein de stationnement (10) à travers lequel un utilisateur du véhicule peut commander le degré d'activation du frein de stationnement, dans lequel le dispositif d'entrée de frein de stationnement (10) comprend :
- un élément d'activation (14) pouvant être déplacé par l'utilisateur par rapport à une base (12) entre une première et une seconde position pour commander le degré d'activation du frein de stationnement ;
- au moins un capteur (16) pour déterminer la position instantanée de l'élément d'activation (14) par rapport à la base (12) entre la première position et la seconde position ;
le dispositif d'entrée de frein de stationnement (10) comprenant en outre un circuit de dispositif de commande (18), pour générer un signal numérique indiquant le degré d'activation du frein de stationnement demandé par l'utilisateur et pour communiquer (19, 22) ce signal numérique au moins à l'ECU de frein de stationnement (20), où le circuit de dispositif de commande comprend une unité centrale de traitement et où l'élément d'activation (14) est chargé mécaniquement pour revenir automatiquement à une position neutre,
**caractérisé en ce que** le circuit de dispositif de commande est programmé pour effectuer une analyse d'une déviation entre une position neutre théorique de l'élément d'activation et une position neutre effective de l'élément d' activation et pour compenser n'importe quelle déviation lors de la génération et/ou de la communication du signal numérique indiquant le degré d'activation du frein de stationnement.

2. Système de frein de stationnement selon la revendication 1, **caractérisé en ce que** le circuit de dispositif de commande (18) fait partie intégrante du dispositif d'entrée de frein de stationnement (10).

3. Système de frein de stationnement selon l'une quelconque des revendications précédentes, **caractérisé en ce que** le circuit de dispositif de commande (18) est fixé sur la base (12) du dispositif d'entrée de frein de stationnement (10).

4. Système de frein de stationnement selon l'une quelconque des revendications précédentes, **caractérisé en ce que** le circuit de dispositif de commande (18) reçoit un signal analogique de l'au moins un capteur de position d'élément d'activation (16).

5. Système de frein de stationnement selon 1' une quelconque des revendications précédentes, **caractérisé en ce que** l'ECU de frein de stationnement (20) est situé à distance du dispositif d'entrée de frein de stationnement (10) et **en ce que** le circuit de dispositif de commande (18) communique avec 1' ECU de frein de stationnement (20) à travers un bus de données numériques (19, 22).

6. Système de frein de stationnement selon la revendication 5, **caractérisé en ce que** le circuit de dispositif de commande communique avec 1' ECU de frein de stationnement (20) à travers un bus de données numériques à communication multiplexe(19,22).

7. Système de frein de stationnement selon l'une quelconque des revendications précédentes **caractérisé en ce que** le capteur (16) servant pour la position instantanée de l'élément d'activation (14) par rapport à la base (12) comprend un capteur magnétorésistif.

8. Système de frein de stationnement selon l'une quelconque des revendications précédentes, **caractérisé en ce que** le dispositif d'entrée de frein de stationnement (10) peut identifier au moins une autre position de l'élément d'activation (14), à l'extérieur de la fourchette comprise entre les première et seconde positions, pour laquelle un signal numérique défini est communiqué à l'ECU de frein de stationnement (20).

9. Système de frein de stationnement selon l'une quelconque des revendications précédentes **caractérisé en ce que** le dispositif d'entrée de frein de stationnement (10) peut identifier au moins une troisième position de l'élément d'activation (14) pour laquelle l'ECU de frein de stationnement (20) peut commander une désactivation du frein de stationnement.

10. Système de frein de stationnement selon l'une quelconque des revendications précédentes **caractérisé en ce que** le dispositif d'entrée de frein de stationnement (10) peut identifier au moins une quatrième position de l'élément d'activation (14) pour laquelle l'ECU de frein de stationnement (20) effectue un essai d'installation de freinage.

11. Système de frein de stationnement selon l'une quelconque des revendications précédentes, **caractérisé en ce que** le dispositif d'entrée de frein de stationnement (10)comprend un élément d'activation sous la forme d'un levier (14) articulé sur la base (12).

12. Système de frein de stationnement selon l'une
quelconque des revendications précédentes, **caractérisé en ce que** l'ECU de frein de stationnement (20) commande électroniquement un actionneur de frein de stationnement pour créer une force proportionnelle à appliquer à un dispositif de frein de stationnement pour obtenir l'effet de freinage proportionnel.

13. Système de frein de stationnement selon la revendication 12, **caractérisé en ce que** l'actionneur de frein de stationnement est un cylindre pneumatique comprimé par ressort dans lequel le ressort crée la force appliquée au dispositif de frein de stationnement et dans lequel une pression pneumatique s'exerçant dans le cylindre contrecarre la force du ressort pour commander la force efficacement appliquée au dispositif de frein de stationnement.
